# DEMANDE DE BREVET EUROPEEN

(11) **EP 0 773 668 A1**
(43) Date de publication de la demande: **14.05.1997**
(21) Numéro de dépôt: 96402357.6
(22) Date de dépôt: 06.11.1996
(51) Int. Cl.: H04N 3/15

(54) **Procédé d'acquisition d'une image électronique d'une scène utilisant une microbalayage pseudo-aléatoire**

(30) Priorité: 08.11.1995 FR 9513195
(71) Demandeur: SAGEM SA, F-75783 Paris Cédex 16 (FR)
(72) Inventeur: Metivier, Philippe, 75625 Paris Cédex 13 (FR)
(74) Mandataire: Bloch, Gérard

(57) **Abrégé**

Procédé d'acquisition d'une image électronique d'une scène observée, dans lequel on recueille des images électroniques fragmentaires de la scène au moyen d'une pluralité d'éléments photosensibles (6j), espacés les uns des autres, et en déplaçant l'image optique par rapport aux éléments photosensibles (6j) pour couvrir sensiblement toute la scène, et, l'image optique étant entraînée dans un déplacement pseudo-aléatoire, on détecte le déplacement pour constituer une image électronique complète (10) par recadrage (8, 9) correspondant des images fragmentaires, le déplacement pseudo-aléatoire étant imposé par un opérateur ou naturel.

## Description

Le problème à l'origine de l'invention était d'augmenter la résolution de l'image électronique d'une scène, l'image étant fournie par une matrice d'éléments photosensibles espacés les uns des autres.

On connaît déjà des procédés dans lesquels on déplace l'image optique par rapport à la pluralité d'éléments pour couvrir sensiblement toute l'image de la scène et, par traitement de l'image, on améliore en résolution spatiale les performances de la pluralité d'éléments.

Les éléments photosensibles, généralement disposés en matrice régulière, ne couvrent pas la totalité de la surface entre les bords de la matrice du fait qu'ils doivent être isolés électriquement les uns des autres ; les images recueillies sont fragmentaires. Il en résulte une perte de sensibilité globale et surtout une perte de résolution pour les images comportant des détails de dimensions comparables ou inférieures à celles d'un élément photosensible et dont l'image risque de se former sur une zone inactive de la matrice. Pour résoudre ce problème, on effectue un sur-échantillonnage de l'image projetée sur la matrice. En d'autres termes, et la matrice étant organisée en lignes et colonnes d'éléments photosensibles, l'image est prise plusieurs fois en compte par la matrice, avec, à chaque fois, un léger décalage selon la direction des lignes et/ou des colonnes.

Ce décalage représente une fraction du pas, par exemple la moitié, séparant, dans la direction considérée, deux éléments photosensibles voisins, si bien que l'on capte, au moyen de quatre images dans cet exemple, la totalité de l'image reçue, qui peut être assurément restituée électroniquement, avec une résolution meilleure, à l'aide d'une grille d'analyse électronique plus fine que la matrice.

Le déplacement de l'image par rapport à la matrice nécessite cependant des mécanismes d'entraînement très précis, donc coûteux et complexes à commander, dont la précision détermine la résolution de l'image.

La présente invention vise à s'affranchir du contrôle des mouvements de l'image optique par rapport aux éléments photosensibles.

A cet effet, l'invention concerne un procédé d'acquisition d'une image électronique d'une scène observée, dans lequel on recueille des images électroniques fragmentaires de la scène au moyen d'une pluralité d'éléments photosensibles, espacés les uns des autres, et en déplaçant l'image optique par rapport aux éléments photosensibles pour couvrir sensiblement toute la scène, procédé caractérisé par le fait qu'on impose à l'image optique un déplacement pseudo-aléatoire, que l'on détecte, pour constituer une image électronique complète par recadrage correspondant des images fragmentaires.

Ainsi, au lieu de chercher à régler mécaniquement avec précision, en amont, la position de l'image sur les éléments photosensibles, on engendre des déplacements quelconques et on en effectue simplement la détection, c'est-à-dire la mesure, pour effectuer une correction aval, électronique, qui peut ainsi atteindre une grande précision avec des moyens peu coûteux et compacts.

Ayant effectué pareille invention, la demanderesse a réalisé que, dans certaines circonstances, l'image optique était naturellement entraînée dans un déplacement pseudo-aléatoire. Il en est ainsi des prises de vues dans un environnement perturbé, comme par exemple à bord d'un aéronef, dans lequel naissent des vibrations parasites de mouvements pseudo-aléatoires.

Et c'est ainsi que la demanderesse entend étendre la portée de sa demande à un procédé caractérisé par le fait que, l'image optique étant entraînée dans un déplacement pseudo-aléatoire, on détecte le déplacement pour constituer une image électronique complète par recadrage correspondant des images fragmentaires.

Ainsi, le déplacement pseudo-aléatoire de l'image optique peut être soit imposé par un opérateur soit naturel et provoqué par des vibrations.

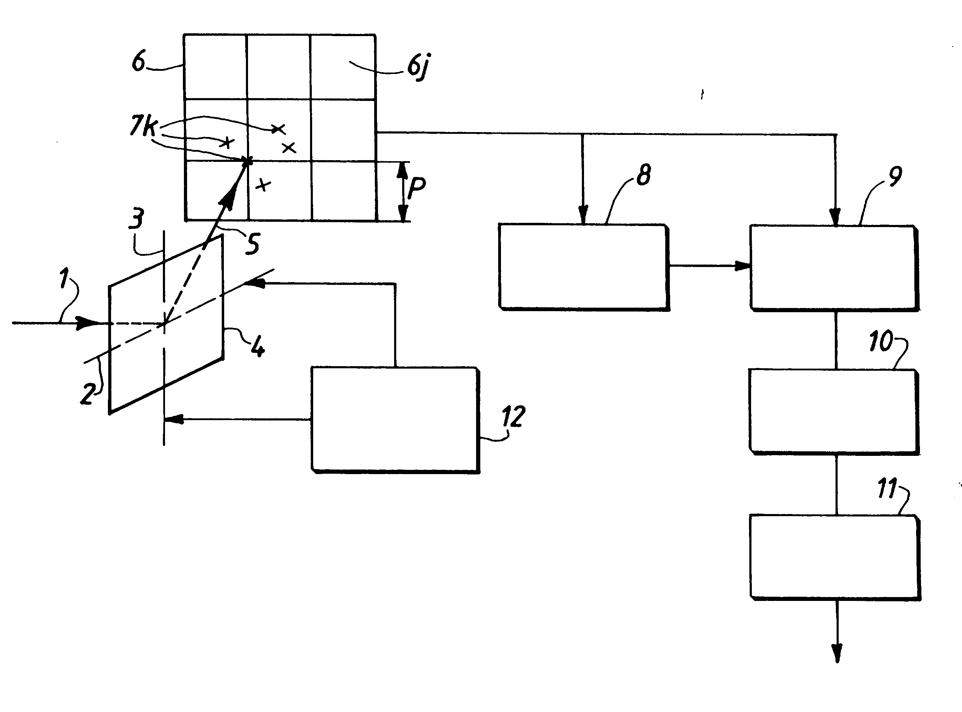

L'invention sera mieux comprise à l'aide de la description suivante du mode de mise en oeuvre préféré du procédé de l'invention, en référence à la figure unique annexée, qui est un synoptique d'un dispositif de prise de vue pour la mise en oeuvre du procédé ci-dessus.

Le dispositif représenté comporte, dans le sens de propagation d'un faisceau optique incident 1, provenant d'une scène observée, et de propagation des signaux électroniques d'image qu'il engendre, un miroir 4 monté à la cardan selon deux axes orthogonaux 2 et 3, un capteur 6 comportant une pluralité d'éléments photosensibles 6j, espacés les uns des autres selon une matrice de pas P, recevant le faisceau réfléchi 5, un circuit 8 de calcul de barycentre énergétique de l'image d'une cible de la scène, commandant un circuit 9 d'adressage d'un plan mémoire à haute résolution qui reçoit aussi l'image électronique de la scène issue du capteur 6, une mémoire d'image 10 contenant le plan mémoire à haute résolution, adressée par le circuit 9, et un circuit 11 de mise en trames vidéo.

Un dispositif 12 générateur de mouvement pseudo-aléatoire commande les rotations du miroir 4 autour des axes 2 et 3. Le dispositif 12 comporte ici, pour chaque axe 2, 3, deux bobinages électriques sensiblement orthogonaux entraînant en rotation un aimant solidaire de l'axe concerné. Les bobinages sont parcourus par des courants pseudo-aléatoires provenant de générateurs de nombres pseudo-aléatoires associés chacun à un convertisseur numérique / analogique commandant le bobinage concerné.

Pour obtenir une image électronique complète, le procédé de l'invention consiste à déplacer de façon pseudo-aléatoire l'image de la scène projetée sur la matrice 6 pour couvrir sensiblement toute l'image de la scène et à détecter les déplacements correspondants pour reconstituer une image complète par recadrage des images fragmentaires fournies par les éléments 6j pour chaque position de déplacement 7k. Par souci de clarté, chaque position de l'image, c'est-à-dire son décalage par rapport à une position de référence, n'est repérée que par un seul point 7k.

La détection du déplacement évite ainsi toute nécessité d'une commande de déplacement précis du miroir 4, puisqu'il suffit de connaître ce déplacement pour effectuer un recadrage fonction de celui-ci, dans la mémoire 10.

Dans cet exemple, le déplacement d'image engendré par le dispositif 12 est détecté, c'est-à-dire mesuré, par le circuit 8 qui effectue ici un calcul de barycentre énergétique de l'image d'une cible de la scène et remplace donc des capteurs de position angulaire du miroir 4. A cet effet, le circuit 8 effectue une analyse de l'image fragmentaire de chaque position 7k d'acquisition d'image afin de déterminer le déplacement correspondant, par rapport à la position de référence, avec une précision bien supérieure au pas P. D'une façon plus générale, on aurait pu prévoir de comparer l'image fragmentaire à l'image reconstituée (10), servant de référence.

La mémoire 10 comporte une pluralité de blocs de micro-pixels électroniques représentant chacun un carré de côté P, c'est-à-dire un élément (pixel) 6j et sa zone inactive de pourtour.

Le décalage par rapport à la position de référence ainsi mesuré sert à adresser en écriture la mémoire 10 pour rafraîchir, dans chaque bloc de "micro-pixels" électroniques, celui qui correspond au décalage mesuré, arrondi à O ou P/2 en ligne et/ou colonne si, par exemple, chaque bloc a un format de 2x2 micro-pixels.

On recadre ainsi l'image fragmentaire sur l'image complète, de référence, par une reconnaissance et une poursuite de l'image d'un ou plusieurs objets de la scène.

La résolution de l'image acquise est encore améliorée par un traitement de signal d'intensité, exposé ci-dessous, dans lequel on combine les images fragmentaires recadrées pour former une image électronique de résolution supérieure à celle des éléments photosensibles 6j.

Les images fragmentaires sont prises à cadence suffisamment élevée pour disposer d'un nombre suffisant de celles-ci afin, statistiquement, de couvrir la quasi-totalité de l'image. Les pixels des images fragmentaires se recouvrent donc souvent partiellement, d'une image fragmentaire à l'autre, du fait de la taille non ponctuelle des éléments 6j et présentent ainsi une redondance d'information.

L'énergie optique issue de chaque point théorique, infiniment petit, de la scène est donc captée plusieurs fois par un ou plusieurs éléments 6j et apparaît ainsi dans plusieurs images fragmentaires. Chaque pixel 6j capte ainsi une pluralité d'énergies optiques provenant des points d'une zone élémentaire de la scène et fournit une information électrique représentant un cumul de ces énergies.

La redondance de chaque mesure d'énergie élémentaire permet d'extraire de ce cumul les énergies individuelles des divers points élémentaires voisins, le nombre des points élémentaires discernables croissant avec la redondance. On dispose en quelque sorte d'une pluralité d'équations liant les intensités d'une pluralité de points élémentaires. La taille de point discernable, ou inversement le nombre de points discernables par pixel, donc la finesse d'analyse, est donc fixé par le nombre d'équations.

Plus précisément, par comparaison des intensités de pixels de différentes images fragmentaires, partiellement superposés ou voisins après recadrage, comportant un point théorique considéré ou voisins de celui-ci, et en prenant en compte la position exacte du point par rapport à la surface occupée par chacun des pixels, on peut en déduire une estimation de l'intensité de ce point théorique. On effectue au besoin une corrélation spatiale avec les résultats relatifs à d'autres points théoriques détectés par des pixels du voisinage, ou une corrélation temporelle, en fonction des résultats précédents. Chaque micro-pixel de l'image finale traitée électroniquement a ainsi une résolution bien supérieure à celle du pas P. On notera que, du fait de la nature pseudo-aléatoire, donc non quantifiée, des déplacements, chaque image fragmentaire est différente des autres. On peut donc accroître à volonté le nombre des images fragmentaires formant une image complète et ainsi augmenter la redondance d'information et donc la finesse d'analyse de l'image optique et la résolution de l'image électronique complète.

De façon classique, le circuit 11 lit, de façon régulière en adressage, la mémoire 10 pour fournir un signal vidéo selon une trame voulue.

La cadence de prise de vues est ici de quelques centaines de hertz, avec une durée d'acquisition de l'ordre de la milliseconde.

Le dispositif 12 présente un spectre de fréquences de déplacement correspondant à la cadence de prise de vues afin de ne pas commander, d'une part, des mouvements trop rapides, inutiles et créant un flou dans l'image, et, d'autre part, des mouvements trop lents, qui empêcheraient un échantillonnage statistique de toutes les images fragmentaires en un temps déterminé. D'une façon générale, le mouvement dit pseudo-aléatoire doit permettre de recueillir des images fragmentaires permettant de reconstituer la quasi-totalité de l'image complète. De ce fait, certains mouvements peuvent avoir un trajet prévisible susceptible d'être soumis à des aléas.

Le procédé est aussi applicable dans le cas où le déplacement pseudo-aléatoire n'est pas imposé volontairement mais est subi, puisqu'un avantage du procédé est de ne pas nécessiter des déplacements déterminés.

On peut ainsi l'appliquer à un appareil de prise de vues soumis à des vibrations naturelles incontrôlées, par exemple pseudo-aléatoires.

Le déplacement de l'image peut avoir une amplitude supérieure au pas P de la matrice 6.

On comprendra que la procédé est applicable à une matrice d'éléments détecteurs qui serait réduite à une seule rangée, "horizontale", tel un CCD, et associée à un dispositif de balayage "vertical" de la scène.

## Revendications

1. Procédé d'acquisition d'une image électronique d'une scène observée, dans lequel on recueille des images électroniques fragmentaires de la scène au moyen d'une pluralité d'éléments photosensibles (6j), espacés les uns des autres, et en déplaçant l'image optique par rapport aux éléments photosensibles (6j) pour couvrir sensiblement toute la scène, caractérisé par le fait que, l'image optique étant entraînée dans un déplacement pseudo-aléatoire, on détecte le déplacement pour constituer une image électronique complète (10) par recadrage (8, 9) correspondant des images fragmentaires.

2. Procédé selon la revendication 1, dans lequel le déplacement pseudo-aléatoire est imposé par un opérateur.

3. Procédé selon la revendication 1, dans lequel le déplacement pseudo-aléatoire est naturel.

4. Procédé selon l'une des revendications 1 à 3, dans lequel on combine les images fragmentaires recadrées pour former une image électronique de résolution supérieure à celle des éléments photosensibles (6j).

5. Procédé selon l'une des revendications 1 à 4, dans lequel on effectue une reconnaissance et une poursuite de l'image électronique d'un objet de la scène pour détecter le déplacement des images fragmentaires.
